# FASCICULE DE BREVET EUROPEEN

(11) **EP 3 175 907 B1**
(45) Date de publication et mention de la délivrance du brevet: **08.08.2018**
(21) Numéro de dépôt: 16201990.5
(22) Date de dépôt: 02.12.2016
(51) Int. Cl.: B01D 53/50, B01D 3/00

(54) **INSTALLATION ET PROCÉDÉ D'ÉPURATION DES FUMÉES D'ÉCHAPPEMENT D'UN MOTEUR D'UN NAVIRE MARIN**
ANLAGE UND VERFAHREN ZUR ABGASREINIGUNG EINES MOTORS EINES WASSERFAHRZEUGS
INSTALLATION AND PROCESS FOR SCRUBBING EXHAUST FUMES FROM AN ENGINE OF A MARINE VESSEL

(30) Priorité: 04.12.2015 FR 1561858
(43) Date de publication de la demande: 07.06.2017
(73) Titulaire: LAB SA, 69007 Lyon (FR)
(72) Inventeur: SIRET, Bernard, 69200 Venissieux (FR); TABARIES, Frank, 83430 Saint Mandrier sur Mer (FR)
(74) Mandataire: Lavoix

(56) Documents cités:
- EP-A2- 0 891 805
- WO-A1-89/07576
- WO-A1-2008/100317
- FR-A1- 2 255 258
- KR-B1- 101 501 910
- US-A- 4 337 231
- US-A1- 2015 147 233

## Description

La présente invention concerne une installation et un procédé d'épuration des fumées d'échappement d'un moteur d'un navire marin.

Les navires marins, que ce soient des paquebots ou d'autres navires, utilisent surtout du fuel comme carburant pour les moteurs diesel assurant leur propulsion. Ce fuel contient jusqu'à 5% en masse de soufre, le plus souvent entre 0,5 et 3,5% en masse. Lors du processus de combustion dans les moteurs, ce soufre est transformé en dioxyde de soufre (SO₂). Par conséquent, les fumées brutes qui s'échappent de ces moteurs sont acides et nocives et elles doivent être épurées avant d'être rejetées à l'atmosphère.

La technologie la plus couramment proposée consiste à utiliser de l'eau de mer pour laver les fumées à épurer, le plus souvent en boucle ouverte : de par son alcalinité, l'eau de mer capture le dioxyde de soufre dans un laveur à l'intérieur duquel, à la fois, les fumées à épurer circulent de manière ascendante et l'eau de mer circule de manière descendante. Dans certaines situations, par exemple lorsque le navire est dans un port ou lorsque l'alcalinité naturelle de l'eau de mer n'est pas suffisante, on doit ajouter un surcroît d'alcalinité par un réactif basique comme la soude ou la magnésie.

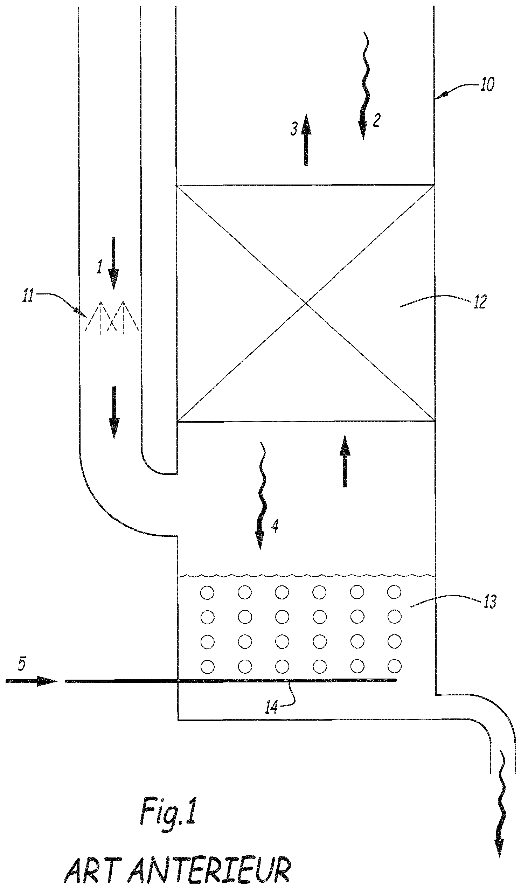

Sur la figure 1 est représenté un exemple d'un tel laveur de l'art antérieur, référencé 10. Ce laveur 10 reprend ainsi par exemple les enseignements de US-2015/147233 et WO-2008/100317. Les fumées d'échappement d'un moteur diesel assurant la propulsion d'un navire sont référencées 1 et sont envoyées au laveur 10, le cas échéant après avoir traversé un dispositif de trempe 11 permettant d'abaisser la température de ces fumées. Afin d'opérer la désulfuration des fumées 1, le laveur 10 est intérieurement pourvu d'un garnissage 12, étant remarqué que d'autres technologies que les laveurs à garnissage sont connues dans la technique, comme des laveurs à pulvérisation en pluie ou des laveurs à plateaux. Dans le cas du laveur à garnissage 10 de la figure 1, les fumées 1 sont introduites dans ce laveur 10 en dessous du garnissage 12 tandis qu'un liquide de lavage 2, typiquement de l'eau de mer qui est, le cas échéant, mélangée à de la soude ou de la magnésie, est distribué en tête du laveur, autrement dit au-dessus du garnissage 12: en circulant au travers du garnissage 12, les fumées ascendantes et le liquide de lavage descendant sont mis en contact l'un avec l'autre de sorte que le dioxyde de soufre des fumées en est capté par le liquide de lavage. Les fumées 3 sortant du garnissage 12 sont ainsi épurées, tandis que les liquides 4 s'écoulant depuis le garnissage 12 sont chargées en sulfites, hydrogénosulfites et/ou acide sulfureux selon le pH de ces liquides 4.

On comprend que les effluents liquides s'écoulant d'un laveur de désulfuration, tels que les liquides 4 sur la figure 1, sont réducteurs et agressifs vis-à-vis des matériaux, ainsi que néfastes pour l'environnement du fait qu'ils possèdent une demande en oxygène importante. Aussi, il est indispensable de procéder à l'oxydation de ces effluents pour en transformer les sulfites, les hydrogénosulfites et/ou l'acide sulfureux en sulfates. Une partie de cette oxydation est faite dans le laveur, mais elle n'est pas suffisante, une des raisons étant que les fumées d'échappement envoyées au laveur sont pauvres en oxygène. L'essentiel de cette oxydation est donc généralement réalisée dans un bac ad hoc, tel que le bac 13 représenté à la figure 1, dans lequel les liquides 4 tombent ou sont transférés. La figure 1 montre le cas où le bac d'oxydation 13 est intégré au laveur 10 mais, en variante, ce bac peut en être dissocié. Dans tous le cas, de l'air 5 est introduit dans le fond du bac 13 pour y buller, par exemple au moyen de rampes de distribution et de bullage 14.

Pour que l'oxydation des liquides 4 dans le bac 13 soit suffisante avant qu'ils n'en soient évacués, il est nécessaire que la hauteur de liquide dans ce bac 13 soit importante, typiquement d'au moins un mètre : le poids du bac 13 et des liquides 4 qu'il contient est donc considérable, ce qui est pénalisant à bord d'un navire. A titre indicatif, le poids d'un mètre d'effluents liquides au pied d'un laveur présentant un diamètre de cinq mètres représente presque vingt tonnes.

De plus, en cas de défaillance du dispositif de trempe 11, le garnissage 12 du laveur 10 risque d'être soumis à des températures excessives, ce qui oblige à des sécurités et redondances importantes si on veut éviter d'endommager des parties du laveur 10 qui seraient sensibles à de telles températures excessives.

Le but de la présente invention est de proposer une installation et un procédé d'épuration, qui permettent de pallier à ces inconvénients, en offrant une solution qui, tout en étant plus sûre et plus économe que les solutions connues, réduit le poids total en opération de l'installation.

A cet effet, l'invention a pour objet une installation d'épuration de fumées d'échappement d'un moteur d'un navire marin, telle que définie à la revendication 1.

L'invention a également pour objet un procédé d'épuration des fumées d'échappement d'un moteur d'un navire marin, tel que défini à la revendication 7.Ainsi, l'invention, qui est destinée à être utilisée de manière privilégiée pour épurer des fumées d'échappement de moteurs diesel par des laveurs humides embarqués à bord de navires, repose sur l'utilisation d'un laveur à deux étages de garnissage, avec de l'air d'oxydation introduit sous le(s) lit(s) de garnissage de l'étage inférieur, tandis que les fumées à désulfurer sont introduites entre ce(s) lit(s) de garnissage de l'étage inférieur et le(s) lit(s) de garnissage de l'étage supérieur. Comme l'oxydation des liquides ayant capté le dioxyde de soufre des fumées est réalisée par le(s) lit(s) de garnissage de l'étage inférieur, le recours à un bac de bullage, tel que le bac 13 décrit plus haut, est évité, ce qui représente un gain de poids et de hauteur important. De plus, l'air d'oxydation qui est introduit dans le(s) lit(s) de garnissage de l'étage inférieur se retrouve, après avoir traversé ce(s) lit(s) de garnissage, mélangé aux fumées entrant dans le laveur et en limite donc la température dans le laveur, en particulier en cas de défaillance du dispositif de trempe, ce qui sécurise l'utilisation de matériaux non métalliques pour le laveur. En outre, l'amenée du flux d'air d'oxydation dans le laveur ne nécessite qu'une faible énergie et peut être réalisée par le truchement d'un matériel peu coûteux, tel qu'un ventilateur.

Des caractéristiques additionnelles avantageuses de l'installation et du procédé conformes à l'invention sont spécifiées aux revendications dépendantes.

L'invention sera mieux comprise à la lecture de la description qui va suivre, donnée uniquement à titre d'exemple et faite en se référant aux dessins sur lesquels :
- la figure 1 est une vue schématique d'une installation d'épuration qui relève de l'art antérieur et qui a été décrite plus haut ; et
- la figure 2 est une vue schématique d'une installation conforme à l'invention, mettant en oeuvre un procédé conforme à l'invention.

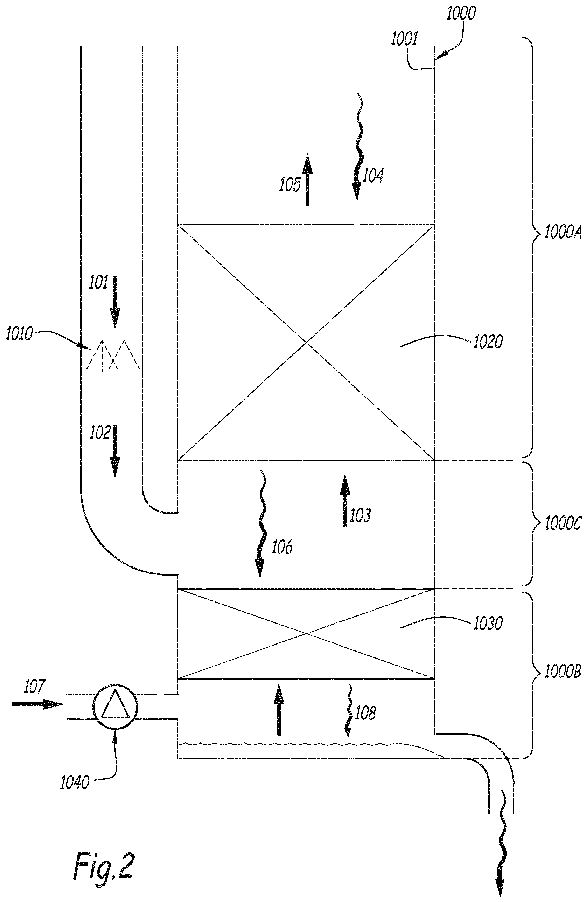

Sur la figure 2 est représentée une installation permettant d'épurer des fumées d'échappement 101 d'un moteur diesel assurant la propulsion d'un navire marin sur lequel est embarquée cette installation. Les fumées 101, qui peuvent avoir fait l'objet d'une dénitrification préalable, sont introduites dans un laveur de désulfuration 1000 après avoir traversé un dispositif de trempe 1010.

Le dispositif de trempe 1010, qui est connu en soi, est conçu pour refroidir les fumées 101. En pratique, avant leur trempe par le dispositif 1010, les fumées 101 sont chaudes, en présentant une température comprise de préférence entre 200 et 450°C, tandis que, après trempe, les fumées 102 sortant du dispositif 1010 présentent une température comprise entre 40 et 80°C, de préférence entre 50 et 70°C. A titre d'exemple non limitatif, le dispositif de trempe 1010 est équipé de buses de pulvérisation, disposées sur un ou plusieurs niveaux dans une gaine de circulation des fumées.

Le laveur 1000 présente deux étages se succédant verticalement, à savoir un étage supérieur 1000A et un étage inférieur 1000B. L'étage supérieur 1000A comprend un lit de garnissage 1020 et l'étage inférieur 1000B comprend un lit de garnissage 1030, ces lits de garnissage 1020 et 1030 étant agencés dans un corps 1001 du laveur 1000, qui relie l'intérieur de l'étage supérieur 1000A à l'intérieur de l'étage inférieur 1000B via une région intermédiaire 1000C du laveur 1000 au niveau de laquelle les fumées 102 sont introduites dans le corps 1001 du laveur.

Au-dessous du lit de garnissage 1020 de l'étage supérieur 1000A, les fumées 102 sont introduites dans la région intermédiaire 1000C au niveau de laquelle ces fumées 102 forment pour partie un flux gazeux 103 circulant de manière ascendante, c'est-à-dire vers le haut, au travers du lit de garnissage 1020.

Au-dessus du lit de garnissage 1020 de l'étage supérieur 1000A, un liquide de lavage 104 est introduit dans le laveur. En pratique, cette introduction du liquide 104 est réalisée par un moyen ad hoc de l'étage supérieur 1000A, qui est connu en soi et qui n'est pas représenté sur la figure 2. Le liquide de lavage 104 est constitué par exemple par de l'eau de mer mélangée, le cas échéant, à de la soude ou de la magnésie, mais peut aussi contenir voire être constitué de saumures résultant d'une opération en boucle fermée du laveur 1000. Dans tous les cas, le liquide de lavage 104 s'écoule de manière descendante, c'est-à-dire vers le bas, au travers du lit de garnissage 1020.

De manière connue en soi, le lit de garnissage 1020 met en contact le flux gazeux ascendant 103 avec le liquide de lavage descendant 104 de manière que le dioxyde de soufre provenant des fumées 102 est retiré du flux gazeux 103 en étant capté par le liquide de lavage 104. Les fumées 105, qui sortent du lit de garnissage 1020 et qui s'échappent vers le haut du laveur 1000, sont épurées, tandis que les liquides 106, qui s'écoulent du lit de garnissage 1020 et qui tombent dans la région intermédiaire 1000C vers l'étage inférieur 1000B, ne sont que très partiellement oxydés, en contenant majoritairement des sulfites, des hydrogénosulfites et/ou de l'acide sulfureux selon le pH de ces liquides 106.

Au-dessous du lit de garnissage 1030 de l'étage inférieur 1000B, un flux d'air 107 est introduit sous pression dans le laveur 1000, à la base de l'étage inférieur 1000B. En particulier, comme illustré à la figure 2, le flux d'air 107 est ainsi introduit à la base du lit de garnissage 1030. L'air de ce flux 107 traverse de manière ascendante le lit de garnissage 1030 et rejoint la région intermédiaire 1000C où il se mélange aux fumées 102 pour former le flux gazeux 103. En pratique, le flux d'air 107 a un débit massique moindre que celui des fumées 101. Ainsi, de manière préférée, le débit massique du flux d'air 107 représente entre 7 et 20% du débit massique des fumées 102.

Le lit de garnissage 1030 met en contact l'air ascendant du flux 107 avec les liquides descendants 106 de manière que, dans ce lit de garnissage 1030, cet air oxyde les liquides 106, en convertissant ainsi leurs sulfites, leurs hydrogénosulfites et/ou leur acide sulfureux en sulfates. Les effluents liquides 108, qui s'écoulent du lit de garnissage 1030 et qui tombent dans le fond de l'étage inférieur 1000B du laveur 1000, sont évacués à l'extérieur du laveur par un moyen ad hoc, connu en soi.

On notera que le lit de garnissage 1020 de l'étage supérieur 1000A n'est pas nécessairement unique, mais que deux lits de garnissage, voire davantage, peuvent être prévus à l'étage supérieur 1000A. Il en est de même pour l'étage inférieur 1000B. Dans tous les cas, suivant un dimensionnement préférentiel, la hauteur du lit de garnissage 1020 ou des différents lits de garnissage de l'étage supérieur 1000A est comprise entre trois et cinq mètres tandis que la hauteur du lit de garnissage 1030 ou des différents lits de garnissage de l'étage inférieur 1000B est comprise entre 0,5 et 1,5 mètre. Ce dimensionnement limite substantiellement le poids total et la hauteur totale du laveur 1000 comparativement au laveur 10 de l'installation de la figure 1 puisque le poids en opération de l'étage inférieur 1000B est bien moindre que celui du bac de bullage 13 et la hauteur de l'étage inférieur 1000B est plus petite que celle du bac de bullage 13.

Un autre intérêt de l'invention est lié au fait que, en pratique, le flux d'air 107 est plus froid que les fumées 102 : il en résulte que le flux d'air 107 assure, pour les fumées entrant dans le laveur 1000, un refroidissement additionnel à celui réalisé par le dispositif de trempe 1010. En d'autres termes, le flux d'air 107 constitue une sécurité supplémentaire vis-à-vis du laveur 1000 en cas de défaillance du dispositif de trempe 1010 ou bien en cas d'excursion non prévue de la température des fumées 101. Cela permet d'utiliser avec sécurité pour le laveur 1000 et ses accessoires des matériaux non métalliques, en particulier, mais de manière non limitative, un matériau à base de matière plastique. Ainsi, selon une caractéristique optionnelle avantageuse, le corps 1001 du laveur 1000 est réalisé en un matériau composite à base de résine, tel qu'une résine chargée ou un stratifié-verre-résine (SVR). De même, les lits de garnissage 1020 et 1030 sont avantageusement réalisés en une matière plastique, telle que du polyéthylène, du polyéthylène haute densité ou du polypropylène. Ces aménagements relatifs aux matériaux utilisés pour le laveur et ses accessoires permettent de donner une grande légèreté à l'installation de la figure 2. A titre d'exemple, par comparaison avec l'installation de la figure 1 dont le bac de bullage 13 induit un poids en opération de presque vingt tonnes avec un diamètre de cinq mètres pour le laveur 10, le poids des éléments constitutifs, tels que des anneaux, du lit de garnissage 1030 et de son holdup liquide est de moins d'une tonne pour une hauteur de ce lit de garnissage 1030 de 0,75 mètre.

Selon une disposition avantageuse, comme le flux d'air 107 peut pénétrer dans le laveur à la base du lit de garnissage 1030, autrement dit au-dessus du niveau des effluents 108 recouvrant le fond du laveur avant qu'ils n'en soient régulièrement évacués, ce flux d'air 107 est introduit dans le laveur 1000 sous l'effet d'amenée d'un ventilateur 1040 délivrant une surpression comprise entre 500 et 5000 Pascals, par rapport à la pression atmosphérique. Contrairement à l'utilisation d'un surpresseur ou d'un compresseur, qui devrait délivrer une pression bien supérieure pour permettre d'utiliser la rampe de bullage 14 de l'installation de la figure 1, l'utilisation du ventilateur 1040 permet de réaliser un gain sur le coût de l'équipement et sur la consommation énergétique.

Il faut aussi noter que la perte de charge du lit de garnissage 1030 est très faible, notamment inférieure à 300 Pascals, puisque le flux d'air 107 a un débit massique moindre que celui des fumées 102.

Les avantages apportés par l'installation de la figure 2 et par le procédé de mise en oeuvre de cette installation peuvent ainsi être résumés :
- un gain de poids et de hauteur important, apporté par la suppression d'un bac de bullage tel que le bac 13 de l'installation de la figure 1 ;
- l'utilisation sécurisée de matériaux non métalliques, en particulier des matières plastiques et des matériaux composites à base de résine ; et
- une économie d'investissement et d'énergie par l'utilisation d'un ventilateur au lieu d'un surpresseur ou d'un compresseur.

## Revendications

1. Installation d'épuration de fumées d'échappement d'un moteur d'un navire marin, comprenant :
- un dispositif de trempe (1010) qui refroidit les fumées à épurer (101), et
- un laveur de désulfuration (1000) à garnissage, à l'intérieur duquel sont introduits à la fois les fumées (102) provenant du dispositif de trempe (1010), qui s'écoulent vers le haut à l'intérieur du laveur, et un liquide (104) de lavage de ces fumées, qui s'écoule vers le bas à l'intérieur du laveur,
**caractérisée en ce que** le laveur (1000) présente, à la fois, un étage supérieur (1000A), qui est intérieurement pourvu d'au moins un lit de garnissage (1020) au-dessus duquel le liquide de lavage (104) est introduit à l'intérieur du laveur, et un étage inférieur (1000B), qui est intérieurement pourvu d'au moins un lit de garnissage (1030) au-dessous duquel un flux d'air (107) est introduit sous pression à l'intérieur du laveur, les fumées (102) provenant du dispositif de trempe (1010) étant introduites à l'intérieur du laveur entre l'étage supérieur et l'étage inférieur de sorte que :
- à l'étage supérieur (1000A) du laveur, le dioxyde de soufre des fumées est capté par le liquide de lavage (104) dans le ou les lits de garnissage correspondants (1020) lorsque ces fumées circulent vers le haut à travers ce ou ces lits de garnissage et y sont mis en contact avec le liquide de lavage circulant vers le bas à travers eux, et
- à l'étage inférieur (1000B) du laveur, les liquides (106) qui proviennent de l'étage supérieur (1000A) sont oxydés par l'air du flux d'air (107) dans le ou les lits de garnissage correspondants (1030) lorsque cet air circule vers le haut à travers ce ou ces lits de garnissage et y est mis en contact avec ces liquides circulant vers le bas à travers eux.

2. Installation suivant la revendication 1, **caractérisée en ce que** l'installation comprend en outre un ventilateur (1040) d'amenée du flux d'air (107), qui est adapté pour produire une surpression comprise entre 500 et 5000 Pascals par rapport à la pression atmosphérique.

3. Installation suivant l'une des revendications 1 ou 2, **caractérisée en ce que** le ou les lits de garnissage (1020) de l'étage supérieur (1000A) ont une hauteur comprise entre trois et cinq mètres, et **en ce que** le ou les lits de garnissage (1030) de l'étage inférieur (1000B) ont une hauteur comprise entre 0,5 et 1,5 mètre.

4. Installation suivant l'une quelconque des revendications précédentes, **caractérisée en ce que** le ou les lits de garnissage (1020) de l'étage supérieur (1000A) et/ou le ou les lits de garnissage (1030) de l'étage inférieur (1000B) sont réalisés en une matière plastique.

5. Installation suivant l'une quelconque des revendications précédentes, **caractérisée en ce que** le laveur (1000) comprend un corps (1001), à l'intérieur duquel sont agencés le ou les lits de garnissage (1020) de l'étage supérieur (1000A) et le ou les lits de garnissage (1030) de l'étage inférieur (1000B), et qui est réalisé en un matériau composite à base de résine.

6. Installation suivant l'une quelconque des revendications précédentes, **caractérisée en ce que** le flux d'air (107) est introduit dans le laveur (1000) à la base du ou des lits de garnissage (1030) de l'étage inférieur (1000B).

7. Procédé d'épuration des fumées d'échappement d'un moteur d'un navire marin, dans lequel :
- des fumées à épurer (101) sont refroidies par un dispositif de trempe (1010) avant d'entrer dans un laveur de désulfuration (1000) à garnissage, ces fumées s'écoulant vers le haut à l'intérieur du laveur, et
- un liquide (104) de lavage des fumées à épurer est également introduit à l'intérieur du laveur, en y circulant vers le bas,
**caractérisé en ce que** les fumées (102) provenant du dispositif de trempe (1010) sont introduites à l'intérieur du laveur (1000) entre un étage supérieur (1000A) et un étage inférieur (1000B) du laveur, qui sont chacun intérieurement pourvus d'au moins un lit de garnissage (1020, 1030),
**en ce qu'**à l'étage supérieur (1000A) du laveur (1000), le ou les lits de garnissage correspondants (1020) sont traversés à la fois vers le haut par les fumées (102), qui proviennent du dispositif de trempe (1010), et vers le bas par le liquide de lavage (104), qui est introduit dans le laveur au-dessus de ce ou ces lits de garnissage (1020), de manière à mettre ces fumées en contact avec ce liquide de lavage pour que ce dernier capte le dioxyde de soufre des fumées, et
**en ce qu'**à l'étage inférieur (1000B) du laveur (1000), le ou les lits de garnissage correspondants (1030) sont traversés à la fois vers le bas par les liquides (106), qui proviennent de l'étage supérieur (1000A), et vers le haut par de l'air, qui provient d'un flux d'air (107) introduit sous pression à l'intérieur du laveur au-dessous de ce ou ces lits de garnissage (1030), de manière à mettre ces liquides en contact avec cet air pour que ce dernier oxyde ces liquides.

8. Procédé suivant la revendication 7, **caractérisé en ce que** le flux d'air (107) a un débit massique compris entre 7 et 20% de celui des fumées (102) entrant dans le laveur (1000).

9. Procédé suivant l'une des revendications 7 ou 8, **caractérisé en ce que** le flux d'air (107) est introduit dans le laveur (1000) avec une surpression comprise entre 500 et 5000 Pascals par rapport à la pression atmosphérique.

10. Procédé suivant l'une quelconque des revendications 7 à 9, **caractérisé en ce que** le flux d'air (107) présente une température inférieure à celle des fumées (102) entrant dans le laveur (1000).

11. Procédé suivant l'une quelconque des revendications 7 à 10, **caractérisé en ce que** les fumées à épurer (101) présentent une température comprise entre 200 et 450°C avant leur refroidissement par le dispositif de trempe (1010) et une température comprise entre 40 et 80°C en sortie du dispositif de trempe.

12. Procédé suivant l'une quelconque des revendications 7 à 10, **caractérisé en ce que** le flux d'air (107) est introduit dans le laveur (1000) à la base du ou des lits de garnissage (1030) de l'étage inférieur (1000B).

## Patentansprüche

1. Anlage zum Reinigen von Abgasen eines Schiffsmotors, umfassend:
- eine Abschreckvorrichtung (1010), die die zu reinigenden Abgase (101) abkühlt, und
- einen Entschwefelungswäscher (1000) mit Füllkörper, in dessen Inneres sowohl die von der Abschreckvorrichtung (1010) kommenden Abgase, die im Inneren des Wäschers nach oben strömen, als auch eine Waschflüssigkeit (104) für diese Abgase, die im Inneren des Wäschers nach unten strömt, eingeführt werden,
**dadurch gekennzeichnet, dass** der Wäscher (1000) sowohl eine obere Stufe (1000A), die im Inneren mit mindestens einem Füllkörperbett (1020) versehen ist, über das die Waschflüssigkeit (104) in das Innere des Wäschers eingeführt wird, als auch eine untere Stufe (1000B) aufweist, die im Inneren mit mindestens einem Füllkörperbett (1030) versehen ist, unter dem ein Druckluftstrom (107) in das Innere des Wäschers eingeführt wird, wobei die von der Abschreckvorrichtung (110) kommenden Abgase in das Innere des Wäschers zwischen der oberen Stufe und der unteren Stufe eingeführt werden, derart, dass:
- an der oberen Stufe (1000A) des Wäschers das Schwefeldioxid der Abgase durch die Waschflüssigkeit (104) in dem oder den korrespondierenden Füllkörperbetten (1020) eingefangen wird, wenn diese Abgase nach oben durch dieses oder diese Füllkörperbetten zirkulieren und dort in Kontakt mit der Waschflüssigkeit kommen, die nach unten durch sie hindurch zirkuliert, und
- an der unteren Stufe (1000B) des Wäschers die Flüssigkeiten (106), die von der oberen Stufe (1000A) kommen, durch die Luft des Luftstroms (107) in dem oder den korrespondierenden Füllkörperbetten (1030) oxidiert werden, wenn diese Luft durch dieses oder diese Füllkörperbetten nach oben zirkuliert und dort in Kontakt mit diesen Flüssigkeiten kommt, die durch sie hindurch nach unten zirkulieren.

2. Anlage nach Anspruch 1, **dadurch gekennzeichnet, dass** die Anlage außerdem einen Ventilator (1040) zum Zuführen des Luftstroms (107) umfasst, der geeignet ist, einen Überdruck zwischen 500 und 5000 Pascal in Bezug auf den Atmosphärendruck zu erzeugen.

3. Anlage nach einem der Ansprüche 1 oder 2, **dadurch gekennzeichnet, dass** das oder die Füllkörperbetten (1020) der oberen Stufe (1000A) eine Höhe zwischen drei und fünf Metern aufweisen und dass das oder die Füllkörperbetten (1030) der unteren Stufe (1000B) eine Höhe zwischen 0,5 und 1,5 Metern aufweisen.

4. Anlage nach einem beliebigen der vorhergehenden Ansprüche, **dadurch gekennzeichnet, dass** das oder die Füllkörperbetten (1020) der oberen Stufe (1000A) und/oder das oder die Füllkörperbetten (1030) der unteren Stufe (1000B) aus einem Kunststoff hergestellt sind.

5. Anlage nach einem beliebigen der vorhergehenden Ansprüche, **dadurch gekennzeichnet, dass** der Wäscher (1000) einen Körper (1001) umfasst, in dessen Innerem das oder die Füllkörperbetten (1020) der oberen Stufe (1000A) und das oder die Füllkörperbetten (1030) der unteren Stufe (1000B) angeordnet sind und der aus einem Verbundmaterial auf der Basis von Harzen hergestellt ist.

6. Anlage nach einem beliebigen der vorhergehenden Ansprüche, **dadurch gekennzeichnet, dass** der Luftstrom (107) in den Wäscher (1000) an der Grundfläche des oder der Füllkörperbetten (1030) der unteren Stufe (1000B) eingeführt wird.

7. Verfahren zum Reinigen von Abgasen eines Schiffsmotors, bei dem:
- die zu reinigenden Abgase (101) durch eine Abschreckvorrichtung (1010) vor dem Eintritt in einen Entschwefelungswäscher (1000) mit Füllkörper abgekühlt werden, wobei diese Abgase im Inneren des Wäschers nach oben strömen, und
- eine Flüssigkeit (104) zum Waschen der zu reinigenden Abgase gleichfalls in das Innere des Wäschers eingeführt wird, wobei sie nach unten zirkuliert,
**dadurch gekennzeichnet, dass** die von der Abschreckvorrichtung (1010) kommenden Abgase (102) in das Innere des Wäschers (1000) zwischen einer oberen Stufe (1000A) und einer unteren Stufe (1000B) des Wäschers eingeführt werden, die jeweils im Inneren mit mindestens einem Füllkörperbett (1020, 1030) versehen sind,
dass in der oberen Stufe (1000A) des Wäschers (1000) das oder die korrespondierenden Füllkörperbetten (1020) sowohl nach oben von den Abgasen (102), die von der Abschreckvorrichtung (1010) kommen, als auch nach unten von der Waschflüssigkeit (104), die über dieses oder diese Füllkörperbetten (1020) in den Wäscher eingeführt werden, durchquert werden, derart, dass diese Abgase in Kontakt mit der Waschflüssigkeit gebracht werden, damit diese Letztere das Schwefeldioxid der Abgase einfängt, und
dass in der unteren Stufe (1000B) des Wäschers (1000) das oder die korrespondierenden Füllkörperbetten (1030) sowohl nach unten von den Flüssigkeiten (106), die von der oberen Stufe (1000A) kommen, als auch nach oben von der Luft, die von einem in das Innere des Wäschers unter diesem oder diesen Füllkörperbetten (1030) eingeführten Druckluftstrom stammt, durchquert werden, derart, dass diese Flüssigkeiten in Kontakt mit dieser Luft gebracht werden, damit Letztere diese Flüssigkeiten oxidiert.

8. Verfahren nach Anspruch 7, **dadurch gekennzeichnet, dass** der Luftstrom (107) einen Massendurchfluss zwischen 7 und 20 % derjenigen der Abgase (102), die in den Wäscher (1000) eintreten, aufweist.

9. Verfahren nach einem der Ansprüche 7 oder 8, **dadurch gekennzeichnet, dass** der Luftstrom (107) in den Wäscher (1000) mit einem Überdruck zwischen 500 und 5000 Pascal in Bezug auf den Atmosphärendruck eingeführt wird.

10. Verfahren nach einem beliebigen der Ansprüche 7 bis 9, **dadurch gekennzeichnet, dass** der Luftstrom (107) eine Temperatur aufweist, die geringer als die der in den Wäscher (1000) eintretenden Abgase (102) ist.

11. Verfahren nach einem der beliebigen der Ansprüche 7 bis 10, **dadurch gekennzeichnet, dass** die zu reinigenden Abgase (101) vor ihrer Abkühlung durch die Abschreckvorrichtung (1010) eine Temperatur zwischen 200 und 450°C und am Ausgang der Abschreckvorrichtung eine Temperatur zwischen 40 und 80°C aufweisen.

12. Verfahren nach einem beliebigen der Ansprüche 7 bis 10, **dadurch gekennzeichnet, dass** der Luftstrom (107) in den Wäscher (1000) an der Grundfläche des oder der Füllkörperbetten (1030) der unteren Stufe (1000B) eingeführt wird.

## Claims

1. Installation for purifying exhaust fumes from an engine of a marine vessel, comprising:
- a quenching device (1010) which cools the fumes to be purified (101), and
- a desulfurisation scrubber (1000) with packing, into which there are introduced both the fumes (102) coming from the quenching device (1010), which flow upwards inside the scrubber, and a liquid (104) for scrubbing the fumes, which liquid flows downwards inside the scrubber,
**characterised in that** the scrubber (1000) has both an upper stage (1000A), which is provided on the inside with at least one packed bed (1020) above which the scrubbing liquid (104) is introduced into the scrubber, and a lower stage (1000B), which is provided on the inside with at least one packed bed (1030) beneath which an air stream (107) is introduced under pressure into the scrubber, the fumes (102) coming from the quenching device (1010) being introduced into the scrubber between the upper stage and the lower stage so that:
- in the upper stage (1000A) of the scrubber, the sulfur dioxide of the fumes is captured by the scrubbing liquid (104) in the corresponding packed bed or beds (1020) when the fumes circulate upwards through the packed bed or beds and are there brought into contact with the scrubbing liquid circulating downwards through the packed beds, and
- in the lower stage (1000B) of the scrubber, the liquids (106) coming from the upper stage (1000A) are oxidised by the air of the air stream (107) in the corresponding packed bed or beds (1030) when that air circulates upwards through the packing bed or beds and is there brought into contact with the liquids circulating downwards through the packed beds.

2. Installation according to claim 1, **characterised in that** the installation further comprises a fan (1040) for supplying the air stream (107), which fan is adapted to produce an overpressure of between 500 and 5000 pascals relative to atmospheric pressure.

3. Installation according to either claim 1 or claim 2, **characterised in that** the packed bed or beds (1020) of the upper stage (1000A) have a height of between three and five metres, and **in that** the packed bed or beds (1030) of the lower stage (1000B) have a height of between 0.5 and 1.5 metres.

4. Installation according to any one of the preceding claims, **characterised in that** the packed bed or beds (1020) of the upper stage (1000A) and/or the packed bed or beds (1030) of the lower stage (1000B) are made of a plastics material.

5. Installation according to any one of the preceding claims, **characterised in that** the scrubber (1000) comprises a body (1001) inside which the packed bed or beds (1020) of the upper stage (1000A) and the packed bed or beds (1030) of the lower stage (1000B) are arranged, and which is made of a resin-based composite material.

6. Installation according to any one of the preceding claims, **characterised in that** the air stream (107) is introduced into the scrubber (1000) at the base of the packed bed or beds (1030) of the lower stage (1000B).

7. Method of purifying the exhaust fumes of an engine of a marine vessel, wherein:
- fumes to be purified (101) are cooled by a quenching device (1010) before entering a desulfurisation scrubber (1000) with packing, the fumes flowing upwards inside the scrubber, and
- a liquid (104) for scrubbing the fumes to be purified is also introduced into the scrubber, circulating downwards therein,
**characterised in that** the fumes (102) coming from the quenching device (1010) are introduced into the scrubber (1000) between an upper stage (1000A) and a lower stage (1000B) of the scrubber (1000), each of which stages is provided on the inside with at least one packed bed (1020, 1030),
**in that** in the upper stage (1000A) of the scrubber (1000), the corresponding packed bed or beds (1020) is/are passed through both in the upward direction by the fumes (102) coming from the quenching device (1010) and in the downward direction by the scrubbing liquid (104) introduced into the scrubber above the packed bed or beds (1020), in order to bring the fumes into contact with the scrubbing liquid so that the scrubbing liquid captures the sulfur dioxide of the fumes, and
**in that** in the lower stage (1000B) of the scrubber (1000), the corresponding packed bed or beds (1030) is/are passed through both in the downward direction by the liquids (106) coming from the upper stage (1000A) and in the upward direction by air coming from an air stream (107) which is introduced under pressure into the scrubber beneath the packed bed or beds (1030), in order to bring the liquids into contact with the air so that the air oxidises the liquids.

8. Method according to claim 7, **characterised in that** the air stream (107) has a mass flow rate of between 7 and 20% of that of the fumes (102) entering the scrubber (1000).

9. Method according to either claim 7 or claim 8, **characterised in that** the air stream (107) is introduced into the scrubber (1000) with an overpressure of between 500 and 5000 pascals relative to atmospheric pressure.

10. Method according to any one of claims 7 to 9, **characterised in that** the air stream (107) has a temperature below that of the fumes (102) entering the scrubber (1000).

11. Method according to any one of claims 7 to 10, **characterised in that** the fumes to be purified (101) have a temperature of between 200 and 450°C before they are cooled by the quenching device (1010) and a temperature of between 40 and 80°C on leaving the quenching device.

12. Method according to any one of claims 7 to 10, **characterised in that** the air stream (107) is introduced into the scrubber (1000) at the base of the packed bed or beds (1030) of the lower stage (1000B).
